# EUROPÄISCHE PATENTSCHRIFT

(11) **EP 3 251 820 B1**
(45) Veröffentlichungstag und Bekanntmachung des Hinweises auf die Patenterteilung: **14.10.2020**
(21) Anmeldenummer: 17160458.0
(22) Anmeldetag: 13.03.2017
(51) Int. Cl.: B29D 30/24, B29D 30/26, B29D 30/32

(54) **VORRICHTUNG ZUR HERSTELLUNG EINES FAHRZEUGLUFTREIFENS**
DEVICE FOR PRODUCING A PNEUMATIC AIRCRAFT TYRE
DISPOSITIF DE FABRICATION D'UN PNEU DE VÉHICULE

(30) Priorität: 01.06.2016 DE 102016209558
(43) Veröffentlichungstag der Anmeldung: 06.12.2017
(73) Patentinhaber: Continental Reifen Deutschland GmbH, 30165 Hannover (DE)
(72) Erfinder: Kwee, Renate, 30419 Hannover (DE); Ernst, Gerald, 35099 Burgwald 3 (DE); Böckler, Cathrin, 30451 Hannover (DE); Schulze, Norbert, 26427 Holtgast (DE); Kneussel, Ewald, 30890 Barsinghausen (DE); Sewerin, Josef, 34508 Willingen (DE)
(74) Vertreter: Widjaja, Wira

(56) Entgegenhaltungen:
- EP-A1- 1 216 814
- EP-A1- 2 719 525
- EP-A2- 0 468 718
- EP-A2- 0 970 802
- EP-A2- 1 256 439
- WO-A1-2015/145356
- LU-A- 85 759

## Beschreibung

Die Erfindung betrifft eine Vorrichtung zum Aufwickeln eines einen Rimstrip aufweisenden Seitenwandprofiles, welche über ihren Umfang angeordnete ein- und ausfahrbare Hauptsegmente aufweist, an deren äußeren Umfang eine elastische Manschette gespannt ist.

Es ist bekannt, Fahrzeugluftreifen in einem zweistufigen Herstellverfahren aufzubauen, wobei die Reifenkarkasse auf einer separaten Karkasstrommel aufgebaut wird, von der Karkasstrommel mit einer Karkasstransfereinheit über eine Bombiermaschine verfahren wird. Durch Bombieren der Reifenkarkasse wird diese mit einem ebenfalls separat aufgebauten und koaxial positionierten Gürtel- Laufstreifen- Paket verbunden, anschließend werden die Seitenwände seitlich an der Reifenkarkasse hochgeschlagen. Der Reifenrohling wird fertiggestellt, der Bombiermaschine entnommen und vulkanisiert. Ein derartiges Reifenherstellverfahren ist beispielsweise aus der DE 10 2013 108 759 A1 bekannt. An den Seitenwandprofilen sind bereits Kautschukmischungsstreifen für Rimstrips andoubliert, welche im fertigen Reifen radial innerhalb und im Bereich um den Wulstkern im fertigen Reifen die Rimstrips bilden, jene Bauteile, mit welchen der Reifen im montierten Zustand mit der Felge in Kontakt kommt. Das Verbinden der Rimstrips mit der Innenschicht und der Karkasseinlage der Reifenkarkasse erfordert radial innenseitig ein relativ heikles mechanisches Hochschlagen, ein "Hocharbeiten", der Rimstrips mittels spezieller "Tuckbuilder" an der Seitenwandtrommel. Es hat sich herausgestellt, dass dieses Hochschlagen insbesondere hinsichtlich Ausführung, Genauigkeit und Reproduzierbarkeit problematisch ist. Eine optimale Anordnung bzw. ein optimaler Sitz der Rimstrips ist jedoch für verschiedene Reifeneigenschaften wichtig, beispielsweise für die Handlingeigenschaften, aber auch für eine einwandfreie Montage und einen einwandfreien Sitz des Reifens auf der Felge.

Die EP 2 719 525 A und EP 0 468 718 A2 offenbaren weitere bekannte Vorrichtungen zum Herstellen von Fahrzeugreifen.

Der Erfindung liegt somit die Aufgabe zugrunde, ein Verfahren zur Verfügung zu stellen, mit welchem die Rimstrips vor allem im heiklen Bereich an der Innenseite der Wulstbereiche des Reifens beim Reifenaufbau optimal positioniert werden können.

Die gestellte Aufgabe wird mit einer Vorrichtung nach Anspruch 1 gelöst.

Die erfindungsgemäße Vorrichtung ist bevorzugt eine Seitenwandtrommel, welche Hauptsegmente aufweist, an deren einem stirnseitigen Enden über ihren Umfang Hochschlagsegmente angeordnet sind, welche unabhängig von den Hauptsegmenten ein- und ausfahrbar sind, wobei über den äußeren Umfang der Hochschlagsegmente eine ringförmig umlaufende elastische Hochschlagmanschette angeordnet ist, an deren Außenseite eine hochelastische Hochschlaglippe aufgespannt ist, deren einer Randabschnitt in einer randseitig an der Manschette umlaufenden oberflächlichen Vertiefung sitzt.

Ein besonderer Vorteil der Erfindung besteht darin, dass durch die hochelastische Hochschlaglippe ein besonders passgenaues Anlegen und Andrücken der Rimstrips an der Innenseite der Reifenkarkasse im Wulstbereich gewährleistet ist, wobei Lufteinschlüsse zwischen den Rimstrips und der Reifenkarkasse sowie Beschädigungen der Rimstrips vermieden werden.

Bei einer bevorzugten Ausführungsvariante des Verfahrens erfolgt im Schritt d) ein Aufwickeln jedes Seitenwandprofils auf eine Seitenwandtrommel, welche randseitig die Hochschlagsegmente und unabhängig von diesen ein- und ausfahrbare Hauptsegmente aufweist, wobei ein Randbereich der am äußeren Umfang der Hochschlagsegmente aufgespannten, hochflexiblen Hochschlaglippe auf den Hauptsegmenten positioniert ist, wobei das Seitenwandprofil derart aufgewickelt wird, dass sich der Rimstrip auf der Hochschlaglippe, sowohl mit einem Bereich der Hochschlagsegmente als auch mit einem Bereich der Hauptsegmente überlappend, befindet, wobei nach Schritt f) die Hochschlagsegmente und die Hauptsegmente eingefahren und die beiden Seitenwandtrommeln axial weggefahren werden und wobei anschließend die Reifenkarkasse mit den anhaftenden Seitenwandprofilen mittels der Karkasstransfereinrichtung zu einer Bombiermaschine transferiert wird und hier der Rohreifen mit weiteren konventionellen Schritten fertiggestellt wird.

Besonders bevorzugt ist ein Verfahren, bei welchem im Schritt d) das Seitenwandprofil mitsamt Rimstrip auf eine von den Segmenten niveaugleich eingestellte Auflagefläche aufgebracht wird.

Bei einer alternativen Ausführungsvariante sind die mit Hochschlaglippen versehenen Hochschlagsegmente nicht an den Seitenwandtrommeln vorgesehen, sondern es werden an der Bombiermaschine entsprechende Hochschlagmechanismen mit Hochschlagsegmenten angeordnet. In diesem Fall wird daher nach Schritt e) die Reifenkarkasse mit den anhaftenden Seitenwandprofilen mittels der Karkasstransfereinrichtung direkt zur Bombiermaschine verfahren. Nach dem reifeninnenseitigen Andrücken der Rimstrips durch Expandieren der Hochschlagsegmente wird der Rohreifen mit konventionellen Schritten fertig aufgebaut.

Bei einer bevorzugten Ausführungsform der erfindungsgemäßen Vorrichtung überragt auch der zweite Randabschnitt der Hochschlaglippe die Hochschlagmanschette. Dieser zweite überstehende Randabschnitt kann ferner um die Hochschlagsegmente geführt und radial innerhalb dieser eingespannt sein.

Als Material für die Hochschlaglippe eignet sich vor allem hochelastischer Gummi, es sind jedoch auch andere hochelastische Materialien zur Herstellung der Hochschlaglippe geeignet.

Besonders vorteilhaft ist ferner eine Ausführung, bei der der in der Vertiefung der Manschette befindliche Randabschnitt der Hochschlaglippe mit der Manschette formschlüssig verbunden ist. Dieser Randabschnitt kann ferner an der Manschette auch angeklebt oder anvulkanisiert sein. Möglich ist auch eine Ausführung der Hochschlaglippe mit einer lokalen Verdickung im Bereich ihres äußeren Umfanges an der Hochschlagmanschette.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 bis Fig. 4 vereinfachte schematische Schnittdarstellungen eines radial äußeren Teilbereiches einer zylindrischen Seitenwandtrommel mit einer Ausführungsvariante der Erfindung in aufeinanderfolgenden Verfahrensstadien und
Fig. 5 eine zu Fig. 1 analoge Schnittdarstellung mit einer weiteren Ausführungsvariante der Erfindung.

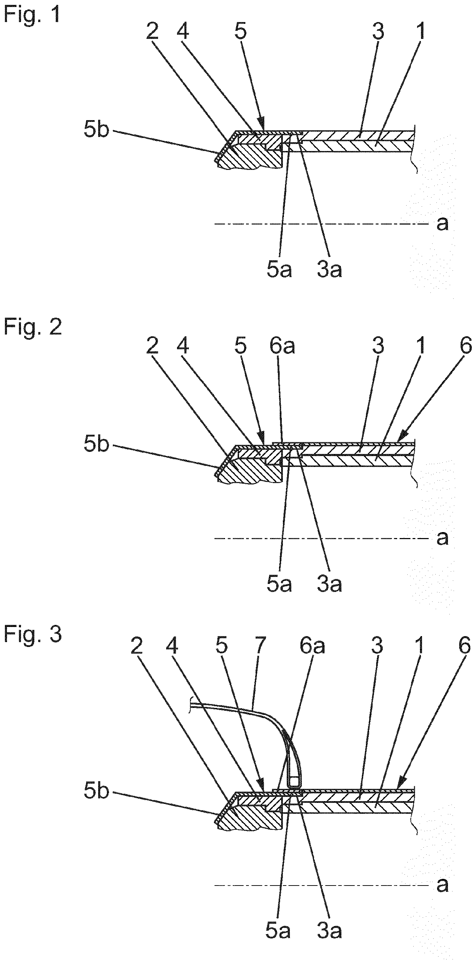

Die in Fig. 1 gezeigte im Wesentlichen zylindrische Seitenwandtrommel ist über ihren Umfang segmentiert und weist mehrere Hauptsegmente 1 und mehrere Hochschlagsegmente 2 auf, wobei letztere im Bereich des einen stirnseitigen Endes der Hauptsegmente 1 angeordnet sind und unmittelbar an diese anschließen. Die Hauptsegmente 1 und die Hochschlagsegmente 2 stellen somit jeweils eine zylindermantelförmige Auflagefläche zur Verfügung, deren Durchmesser veränderbar ist. Die Hauptsegmente 1 und die Hochschlagsegmente 2 bestehen vorzugsweise aus Metall und sind mittels in an sich bekannter Weise ausführbarer Mechanismen, welche Schubstangen, Linearführungen und dergleichen umfassen können, unabhängig voneinander ein- und ausfahrbar. Mit a ist die angedeutete Drehachse der Seitenwandtrommel bezeichnet.

Am äußeren Umfang der Hauptsegmente 1 ist eine zylindermantelartige, aus elastischem Gummi bestehende Seitenwandmanschette 3 aufgebracht. Die Seitenwandmanschette 3 ist entweder zylindrisch und unkonturiert oder an ihrer Außenfläche im Wesentlichen gemäß der Kontur des aufzuwickelnden rohen Seitenwandprofiles beschliffen, sodass das Seitenwandprofil mit seiner Innenseite flächig auf der Außenseite der Seitenwandmanschette 3 positioniert werden kann.

Am äußeren Umfang der Hochschlagsegmente 2 ist eine ebenfalls aus elastischem Gummi bestehende, im Wesentlichen ringförmig umlaufende Hochschlagmanschette 4 aufgespannt. An ihrem den Hochschlagsegmenten 2 zugewandten Randbereich ist die Seitenwandmanschette 3 an ihrer Außenfläche von einer oberflächlichen im Querschnitt flach L-förmigen zum Rand offenen Vertiefung 3a zur Aufnahme einer Hochschlaglippe 5 umlaufen, wobei die Hochschlaglippe 5 in der Vertiefung 3a insbesondere formschlüssig aufgenommen ist.

Beim Ein- bzw. Ausfahren der Segmente 1, 2 werden die elastischen Manschetten 3, 4 entsprechend gedehnt bzw. entlastet. Die Manschetten 3, 4 sind daher soweit elastisch, dass sie vollständig ausgefahrenen Segmenten 1, 2 ohne weiteres folgen können. Alternativ können die Manschetten 3, 4 mit den Segmenten 1, 2 derart formschlüssig verbunden sein, dass sie mit den Segmenten 1, 2 zwangsweise mitgeführt werden.

An der Außenseite der Hochschlagmanschette 4 ist die bereits erwähnte Hochschlaglippe 5 aufgespannt, welche hochelastisch und somit sehr gut dehnbar ist und vorzugsweise aus Gummi oder aus einem anderen gut dehnbaren Material besteht. Im Material der Hochschlaglippe 5 ist vorzugsweise ein textiles Gewebe eingebettet, welches die Hochschlaglippe 5 verstärkt. Die Hochschlaglippe 5 überragt die Hochschlagmanschette 4 beidseitig und weist derart einen in der Vertiefung 3a der Seitenwandmanschette 3 positionierten Randabschnitt 5a auf. Infolge der unter Dehnung erfolgten Aufspannung der Hochschlaglippe 5 verläuft der zweite über den freien Rand der Hochschlagsegmente 2 überstehende Randabschnitt 5b in Richtung zur Achse a der Seitenwandtrommel. Bei einer alternativen Ausführung ist die Hochschlaglippe 5 derart gestaltet, dass sie keinen überstehenden Randabschnitt aufweist.

Die Hochschlaglippe 5 kann mit der Seitenwandmanschette 3 verbunden sein, beispielsweise in der Vertiefung 3a angeklebt oder anvulkanisiert sein. Die Vertiefung 3a ist an die Dicke der Hochschlaglippe 5 derart angepasst, dass die Hochschlaglippe 5 gemeinsam mit der Seitenwandmanschette 3 eine niveaugleiche Auflagefläche für das Seitenwandprofil bildet. Die Hochschlaglippe 5 kann an ihrem äußeren Umfang im Bereich der Hochschlagmanschette 4 eine lokale Verdickung aufweisen.

Zur Herstellung eines Fahrzeugluftreifens wird auf einer in den Figuren nicht gezeigten Karkassaufbautrommel eine Reifenkarkasse 7 (Fig. 3) aus einer Innenschicht, einer ein- oder mehrlagigen Karkasseinlage und zwei Kernpaketen aus Wulstkernen und Apexen aufgebaut. Die Reifenkarkasse 7 kann ferner mit weitere Bauteilen, insbesondere Wulstverstärkungslagen oder Schulterprofile, versehen werden. Mittels einer Karkasstransfereinrichtung wird die fertig aufgebaute Reifenkarkasse 7 der Karkassaufbautrommel entnommen.

Auf zwei Seitenwandtrommeln wird jeweils ein extrudiertes Seitenwandprofil 6 mit einem randseitig andoublierten oder einem mit dem Seitenwandprofil 6 koextrudierten Rimstrip 6a derart aufgewickelt, dass das Seitenwandprofil 6 im Wesentlichen bis zum Rand der Vertiefung 3a der Seitenwandmanschette 3 reicht und der Rimstrip 6a sowohl in diesem Bereich als auch außerhalb der Hochschlagmanschette 4 auf der Hochschlaglippe 5 aufliegt (Fig. 2).

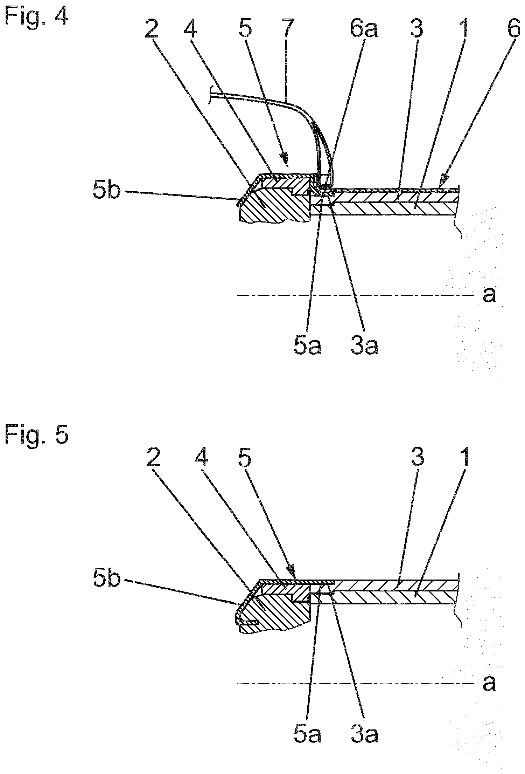

Im nächsten Schritt werden die beiden Seitenwandtrommeln an die an der Karkasstransfereinrichtung gehaltenen Reifenkarkasse 7 koaxial herangefahren und innerhalb der Reifenkarkasse 7 derart positioniert, dass sich die Rimstrips 6a innerhalb der Wulstbereiche der Reifenkarkasse 7 und die Wulstbereiche radial außerhalb der Vertiefungen 3a und daher gerade noch im Bereich der Hauptsegmente 1 befinden. Fig. 3 zeigt den folgenden Schritt anhand der einen Seitenwandtrommel, wobei die Hauptsegmente 1 und die Hochschlagsegmente 2 synchron expandiert sind, sodass der Rimstrip 6a bei dem einen Wulstbereich geklemmt ist. Im nächsten Schritt gemäß Fig. 4 ist durch ein Expandieren der Hochschlagsegmente 2 die Hochschlagmanschette 4 mitsamt der Hochschlaglippe 5 in die Reifenkarkasse 7 radial verfahren, wodurch der auf der Hochschlaglippe 5 befindliche Abschnitt des Rimstrips 6a reifeninnenseitig an der Reifenkarkasse 7 angedrückt wird. Die aus dem hochelastischen Material bestehende Hochschlaglippe 5 ermöglicht dabei ein besonders passgenaues Anlegen und Andrücken des Rimstrips 6a an der Karkasseinlage unter Vermeidung von Lufteinschlüssen und Beschädigungen des Rimstrips 6a.

Nach dem Andrücken der Rimstrips 6a werden die Hochschlagsegmente 2 der Seitenwandtrommeln eingefahren und die beiden Seitenwandtrommeln axial weggefahren. Die Karkasstransfereinrichtung verfährt die Reifenkarkasse 7 mit den angehefteten Seitenwandprofilen 6 zu einer Bombiermaschine, an welcher die Reifenkarkssse7 in an sich bekannter Weise mit einem Laufstreifen-Gürtel-Paket verbunden wird und die Seitenwandprofile seitlich an der Außenseite der Reifenkarkasse 7 hochgeschlagen und angedrückt werden.

Bei einer weiteren Ausführungsvariante des Verfahrens wird die Reifenkarkasse 7 nach Andrücken der Rimstrips 6a mitsamt den anhaftenden Seitenwandprofilen 6 mittels der Karkasstransfereinrichtung zu einer Bombiermaschine verfahren, welche Hochschlagmechanismen mit Hochschlagsegmenten und Hochschlaglippen, analog wie beschrieben, aufweist. Mittels dieser Hochschlagsegmente 2 wird der Rimstrip 6a auf die bereits beschriebene Weise an die Reifenkarkasse 6 angedrückt und der Rohreifen nachfolgend mit weiteren konventionellen Schritten fertiggestellt.

Bei der in Fig. 5 gezeigten Ausführungsvariante der Seitenwandtrommel ist der freie Endabschnitt 5b der Hochschlaglippe 5 um die Hochschlagsegmente 2 herumgeführt und eingespannt.

### Bezugsziffernliste

- 1: Hauptsegment
- 2: Hochschlagsegment
- 3: Seitenwandmanschette
- 3a: Vertiefung
- 4: Hochschlagmanschette
- 5: Hochschlaglippe
- 5a, 5b: Randabschnitt
- 6: Seitenwandprofil
- 6a: Rimstrip
- 7: Reifenkarkasse

## Patentansprüche

1. Vorrichtung zum Aufwickeln eines einen Rimstrip (6a) aufweisenden Seitenwandprofiles (6), welche über ihren Umfang angeordnete ein- und ausfahrbare Hauptsegmente (1) aufweist, an deren äußeren Umfang eine elastische Manschette (3) gespannt ist,
wobei an dem einen stirnseitigen Ende der Hauptsegmente (1) über ihren Umfang Hochschlagsegmente (2) angeordnet sind, welche unabhängig von den Hauptsegmenten (1) ein- und ausfahrbar sind, wobei über den äußeren Umfang der Hochschlagsegmente (2) eine ringförmig umlaufend eine elastische Hochschlagmanschette (4) angeordnet ist, an deren Außenseite eine hochelastische Hochschlaglippe (5) aufgespannt ist,
**dadurch gekennzeichnet,**
**dass**, deren einer Randabschnitt (5a) in einer randseitig an der Manschette (3) umlaufenden oberflächlichen Vertiefung (3a) sitzt.

2. Vorrichtung nach Anspruch 1, **dadurch gekennzeichnet, dass** auch der zweite Randabschnitt der Hochschlaglippe (5) die Hochschlagmanschette (4) überragt.

3. Vorrichtung nach Anspruch 1 oder 2, **dadurch gekennzeichnet, dass** sie eine Seitenwandtrommel ist.

4. Vorrichtung nach einem der Ansprüche 1 bis 3, **dadurch gekennzeichnet, dass** zum Aufwickeln des Seitenwandprofiles (6) die Hochschlaglippe (5) gemeinsam mit der Manschette (3) eine einheitliche Auflagefläche für das Seitenwandprofil (6) bildet.

5. Vorrichtung nach einem der Ansprüche 1 bis 4, **dadurch gekennzeichnet, dass** der zweite überstehende Randabschnitt (5b) der Hochschlaglippe (5) um die Hochschlagsegmente (2) geführt und radial innerhalb dieser eingespannt ist.

6. Vorrichtung nach einem der Ansprüche 1 bis 5, **dadurch gekennzeichnet, dass** die Hochschlaglippe (5) aus hochelastischem Gummi besteht.

7. Vorrichtung nach einem der Ansprüche 1 bis 6, **dadurch gekennzeichnet, dass** der in der Vertiefung (3a) der Manschette (3) befindliche Randabschnitt (5a) der Hochschlaglippe (5) mit der Manschette (3) formschlüssig verbunden ist.

8. Vorrichtung nach einem der Ansprüche 1 bis 7, **dadurch gekennzeichnet, dass** der in der Vertiefung (3a) der Manschette (3) befindliche Randabschnitt (5a) der Hochschlaglippe (5) an der Manschette (3) angeklebt oder anvulkanisiert ist.

9. Vorrichtung nach einem der Ansprüche 1 bis 8, **dadurch gekennzeichnet, dass** die Hochschlagmanschette (4) aus elastischem Gummimaterial besteht.

10. Vorrichtung nach einem der Ansprüche 1 bis 9, **dadurch gekennzeichnet, dass** die Hochschlaglippe (5) an ihrem äußeren Umfang im Bereich der Hochschlagmanschette (4) eine lokale Verdickung aufweist.

## Claims

1. Device for winding up a sidewall profile (6) having a rim strip (6a), which device has arranged over its circumference retractable and extendable main segments (1), on the outer circumference of which an elastic sleeve (3) is fitted,
wherein at one extreme end of the main segments (1) there are arranged over their circumference turnup segments (2), which are retractable and extendable independently of the main segments (1), wherein an annually surrounding elastic turnup sleeve (4), on the outer side of which a highly elastic turnup lip (5) is mounted, is arranged over the outer circumference of the turnup segments (2),
**characterized**
**in that** one peripheral portion (5) of said lip sits in a superficial recess (3a) running peripherally around the sleeve (3).

2. Device according to Claim 1, **characterized in that** the second peripheral portion of the turnup lip (5) also protrudes beyond the turnup sleeve (4).

3. Device according to Claim 1 or 2, **characterized in that** it is a sidewall drum.

4. Device according to one of Claims 1 to 3, **characterized in that**, for winding up the sidewall profile (6), the turnup lip (5) forms together with the sleeve (3) a uniform bearing surface for the sidewall profile (6).

5. Device according to one of Claims 1 to 4, **characterized in that** the second protruding peripheral portion (5b) of the turnup lip (5) is led around the turnup segments (2) and fitted radially inside them.

6. Device according to one of Claims 1 to 5, **characterized in that** the turnup lip (5) consists of highly elastic rubber.

7. Device according to one of Claims 1 to 6, **characterized in that** the peripheral portion (5a) of the turnup lip (5) that is in the recess (3a) of the sleeve (3) is connected in a form-fitting manner to the sleeve (3).

8. Device according to one of Claims 1 to 7, **characterized in that** the peripheral portion (5a) of the turnup lip (5) that is in the recess (3a) of the sleeve (3) is adhesively bonded or vulcanized onto the sleeve (3).

9. Device according to one of Claims 1 to 8, **characterized in that** the turnup sleeve (4) consists of elastic rubber material.

10. Device according to one of Claims 1 to 9, **characterized in that** the turnup lip (5) has a local thickening on its outer circumference in the region of the turnup sleeve (4).

## Revendications

1. Dispositif d'enroulement d'un profilé de paroi latérale (6) qui comporte une bande de jante (6a) et qui comporte des segments principaux (1), extensibles et rétractables, qui sont disposés sur sa circonférence et sur la circonférence extérieure desquels un manchon élastique (3) est tendu, des segments (2) à haute résistance aux chocs, qui peuvent être rétractés et étendus indépendamment des segments principaux (1), étant disposés à l'une des extrémités frontales des segments principaux (1) sur leur circonférence, un manchon élastique circonférentiel (4) à haute résistance aux chocs étant disposé sur la circonférence extérieure des segments (2) à haute résistance aux chocs, manchon à l'extérieur duquel une lèvre hautement élastique (5) à haute résistance aux chocs est tendue, **caractérisé en ce que**
une portion de bord (5a) est logée dans un évidement superficiel (3a) s'étendant du côté bord sur le manchon (3) .

2. Dispositif selon la revendication 1, **caractérisé en ce que** la deuxième portion de bord de la lèvre (5) à haute résistance aux chocs fait saillie du manchon (4) à haute résistance aux chocs.

3. Dispositif selon la revendication 1 ou 2, **caractérisé en ce que** ledit dispositif est un tambour à paroi latérale.

4. Dispositif selon l'une des revendications 1 à 3, **caractérisé en ce que**, pour enrouler le profilé de paroi latérale (6), la lèvre (5) à haute résistance aux chocs fore conjointement avec le manchon (3) une surface d'appui uniforme destinée au profilé de paroi latérale (6).

5. Dispositif selon l'une des revendications 1 à 4, **caractérisé en ce que** la deuxième portion de bord saillante (5b) de la lèvre (5) à haute résistance aux chocs est guidée autour des segments (2) à haute résistance aux chocs et est tendue radialement à l'intérieur de ceux-ci.

6. Dispositif selon l'une des revendications 1 à 5, **caractérisé en ce que** la lèvre (5) à haute résistance aux chocs est en caoutchouc hautement élastique.

7. Dispositif selon l'une des revendications 1 à 6, **caractérisé en ce que** la partie de bord (5a) de la lèvre (5) à haute résistance aux chocs, qui est située dans l'évidement (3a) du manchon (3), est reliée au manchon (3) par complémentarité de formes.

8. Dispositif selon l'une des revendications 1 à 7, **caractérisé en ce que** la portion de bord (5a) de la lèvre (5) à haute résistance aux chocs, qui est située dans l'évidement (3a) du manchon (3), est collée ou vulcanisée sur le manchon (3).

9. Dispositif selon l'une des revendications 1 à 8, **caractérisé en ce que** le manchon (4) à haute résistance aux chocs est en caoutchouc élastique.

10. Dispositif selon l'une des revendications 1 à 9, **caractérisé en ce que** la lèvre (5) à haute résistance aux chocs présente un épaississement local sur sa circonférence extérieure au niveau du manchon (4) à haute résistance aux chocs.
